# EUROPEAN PATENT SPECIFICATION

(11) **EP 2 366 847 B1**
(45) Date of publication and mention of the grant of the patent: **05.12.2012**
(21) Application number: 10156981.2
(22) Date of filing: 19.03.2010
(51) Int. Cl.: E04F 13/00, E04B 1/74

(54) **Insulating and draining board**
Planche isolante et drainante
Isolier- und Drainageplatte

(43) Date of publication of application: 21.09.2011
(73) Proprietor: Ignucell AB, 312 22 Laholm (SE)
(72) Inventor: Jalakas, Jonas, 134 60 Ingarö (SE)
(74) Representative: Åkesson, Sten Jan-Åke

(56) References cited:
- EP-A2- 0 217 717
- DE-A1- 3 214 907
- GB-A- 2 063 330
- US-A- 4 586 304
- US-A1- 2006 068 188

## Description

### Technical field

The present invention relates to an insulating and draining board and specifically such boards made of foamed plastics.

### Background

Building, such as houses, or other constructions, may be partly made from boards of foamed plastic having insulating properties. Such boards may be exposed to water originating from rain or humid air contacted with the building, which water may cause damages to the boards and the building.

The US patent with number 4,586,304 discloses insulated siding panels containing a panel of hardboard and a polystyrene foam layer with upper and lower faces having V-shape. The polystyrene foam is a non-draining moisture vapour barrier and a network of channels is provided between the hardboard and the foam layer to transmit moisture vapour.

Thus, there is a need for boards made from foamed plastic with efficient draining properties.

The document US 4,586,304 discloses an insulated siding panel comprising a panel of hardboard attached by adhesive to a polystyrene foam layer. The rear surface of the foam layer is parallel to the front face of the hardboard panel. The upper and lower faces have parallel V-shape with the upper face having the V inward for collection of moisture. The panels are installed by overlapping the hardboard of two adjacent panels to allow the foam layers to interlock leaving a space for a sponge layer. Channels are formed in the foam downwardly between the hardboard and the foam and across the bottom of the foam to provide an intercommunicating network to transmit moisture vapor. The panels can be nailed to the front face of a building using a spacer device to set the distance of the upper edge of the panel from the front face of the building to prevent compression of the foam.

A problem of the solution according to the disclosure US 4,586,304 is that water may accumulate in various unwanted places, e.g. between the surfaces of two interlocked foam layers. In particular, in the case of a non-ideal interlocking of the foam layers, or when cracks or holes are present in the foam layers, water may be assembled in unwanted places.

Moreover, the document DE 2925513 discloses a method for applying a multi-layer protective layer to external walls of a building which are located below ground level. A problem of the solution according DE 2925513 is that the water drainage may not be controlled.

### Summary of the invention

It is an object of the present invention to make available an efficient insulating and draining board, as well as a method for production of an efficient insulating and draining board.

According to a first aspect of the invention, the object is achieved by means of an insulating and draining board with two opposing main side surfaces and a top side portion and a bottom side portion, said board being formed by bonded beads of foamed plastic, wherein pores are present between the beads forming a network for drainage of water, which bottom side portion of the board being tapered towards a first free end extending in the longitudinal direction of the board, the first free end being located between planes coinciding with the main side surfaces,

An insulating board may be suitable material for building of for example houses, as such a board may lend the house energy saving properties.

A draining board may be suitable material for building for example houses, as such a board may remove water from the house, thus minimising risk of damage to the house as a result of the water.

The term water may refer to water in liquid, gaseous, or vapour phase, or combinations thereof; water in any of these phases may have been converted from another one of these phases, or water being in equilibrium between two or more of these phases; and mixes thereof.

Beads of foamed plastic are suitable material for the boards according to the invention, as such beads are easy to handle prior to producing the boards, as such beads results in low weight of the boards, and as such beads results in good insulating properties of the board. Further, such material may efficiently be bonded according to the invention to form boards. Yet further, such material of foamed plastic results in a low consumption of plastic material even for producing large volumes of board. Foamed plastic results in boards with low density and thus, for example, easy handling of the boards.

The board being formed by bonded beads may result in boards suitable for use as building material, with suitable properties with regards to, for example, resistance towards breakage, bending and compression; and load bearing capacity, or other suitable properties.

The term foamed plastic may also be referred to as cellular plastic or expanded plastic.

The use of beads, according to the invention, efficiently creates pores between the beads, which pores are present between the beads forming a network for drainage of water. Thus, water present in the boards may be drained from the boards by, for example, gravity and/or movements of air. The pores forming a network may allow water to be ventilated through the board. Thus, water present in the board may be removed by air. Furthermore, small droplets of water, vapour of water, and/or water in gas phase, present in the ambience of the board may be ventilated through the boards, Further, vapour being condensed inside the board, for example as a result of movement of air through the board and a temperature gradient across the board acting such that the temperature of the air is reduced, or water entering the board as liquid, may be ventilated out of the board by air, or be drained from the board by trickling downwards by gravity, or a combination thereof. The draining of water from the board may be through flowing, running, trickling or dripping, or combinations thereof, depending on, for example, the amount of water being drained from the board.

Thus, the board according to the invention may prevent water from being present in the board or minimise or reduce the amount of water being present in the board, or any construction comprising the board.

It is a further benefit with the board according to the invention, that the use of the board may omit the need for ventilation channels, for example channels between the board and any material in contact with the main side surfaces of the board, such as a wall siding, to remove water.

The board according to the invention being tapered towards a first free end extending in the longitudinal direction of the board, the first free end being located between planes coinciding with the main side surfaces, may result in that water being drained downwards through the board is drained from the board at a distance from the main side surfaces and between planes coinciding with the main side surfaces. Thus, water may kept away and drained away from the main side surfaces. Thus, water may kept away and drained away from any material in contact with the main side surfaces. The tapering may results in a concentration or focusing of the water being drained from the board towards the first free end extending in the longitudinal direction of the board, thus in the case of another board being positioned below the board, the water may advantageously be entering said another board at a distance from the main sides of said another board and be drained downwards through said another board between the main side surfaces of said another board.

Furthermore, the tapering may result in less water being retained in the board after water has been drained through the board.

The bonded beads may lend the board a coarse or rough surface suitable for holding materials such as plaster, stucco, paint, or putty.

The bottom side portion may be tapered towards one or more additional free ends, according to one embodiment of the invention.

Said each additional free end may be located between the planes coinciding with the main side surfaces. Thus water may kept away and drained away at a distance from the main side surfaces. Thus, water may kept away from and drained away from any material in contact with the main side surfaces. As one result, any material being in contact with the main side surfaces, such as plaster, stucco, paint, sidings, insulation, or wooden building material, may be prevented from being damaged or in other ways affected by the water.

A groove may be provided in the top side portion with a shape complementary to the shape of the tapering bottom side portion. Thus, efficient and close positioning of one board on top of another may be realised. Thus, efficient isolation may be obtained and efficient mounting of boards during, for example, building of, for example, houses. Furthermore, water being drained from one board at distance from the main side surfaces positioned on top of another board, may enter said another board at a distance from the main side surfaces of said another board.

The bottom side portion may have a cross-section comprising at least one V-shaped or U-shaped portion. Such cross-sections may be suitable for providing the board with good draining properties, and water drained from the board may efficiently be kept away from the main side surfaces.

The bottom side portion may have a V-shaped, U-shaped, or W-shaped cross-section. Such a shaped bottom side portion, may be suitable for providing the board with good draining properties and water drained from the board may efficiently be kept away from the main side surfaces.

The bottom side portion may have an unsymmetrical V-shape, with the apex of the V being closer to one of the planes coinciding with the main side surfaces than the other. It may be preferred that the point of the V being positioned at a distance, as seen in the transverse or thickness direction of the board, from one of the planes coinciding with the main side surfaces of less than 50% of the thickness of the board, it may be more preferred that said distance from one of the planes coinciding with the main side surfaces is less than 40%, and it may be most preferred that said distance from one of the planes coinciding with the main side surfaces is less than 25%. With such a shaped bottom side portion, water drained from the board may efficiently be kept away from both main side surfaces, and it may be particularly kept away from one of the sides, i.e. the side coinciding with the plane furthest away from the first free end, as compared to the plane coinciding with the other side as compared to the other side.

The first free end extending in the longitudinal direction of the board may be closer to one of the planes coinciding with the main side surfaces. It may be preferred that the first free end being positioned at a distance from one of the planes coinciding with the main side surfaces of less than 50% of the thickness of the board, it may be more preferred that said distance from one of the planes coinciding with the main side surfaces is less than 40%, and it may be most preferred that said distance from one of the planes coinciding with the main side surfaces is less than 25%. With such a shaped bottom side portion, water drained from the board may efficiently be kept away from both main side surfaces, and it may be particularly kept away from one of the sides, i.e. the side coinciding with the plane furthest away from the first free end, as compared to the plane coinciding with the other side.

The main side coinciding with the plane at the closest distance to the first free end may be selected as the utmost side of the board when mounted or build into, for example, a building, i.e., for example, the side closest to the exterior of a house. Thus, water drained by the board may be kept far away from any interior constructions or materials such as inner insulation, board materials or panels, and still be kept away from any material in contact with the board on the outside of the house, such as sidings, stucco, paint, or plaster.

The term beads refers to particles having irregular or regular shapes and the use of the term diameter for defining the dimension of such particles relates to a largest dimension of the particle.

The beads of foamed plastic may have an average diameter below 7 mm, for example, the beads of foamed plastic may have an average diameter below 4 mm. All beads may be below 7 mm. Beads with such sizes may provide efficient insulation properties. Further, beads with such average diameters may provide efficient draining of water. Yet further, beads with such average diameters may provide boards with high strength.

The beads of foamed plastic may be bonded by means of a binding agent. Thus efficient bonding may be achieved. Such a bonding may be strong and a board produced by such a bonding may be easily produced.

The binding agent may comprise compounds selected from the group consisting of PVA and acrylate, or combinations thereof.

The draining board may comprises at least one impregnating agent.

The impregnating agent may comprise a flame retardant. The impregnating agent may be selected from the group consisting of flame retardant, sodium silicate, and potassium silicate, or combinations thereof. Such impregnating agents may reduce the risk of the board catching fire.

At least one impregnating agent may provide desired properties to the board. For example, the hydrophilicity of the board may be decreased. Thus, for example, water draining properties of the board may be improved. Sodium silicate, and potassium silicate, or combinations thereof, may improve the water draining properties of the board.

At least the portion of the bonded beads facing the surroundings , i.e. the surface of the board, may be surface coated with the impregnating agent. Surface coating is efficient as the required amount of impregnating agent may be kept low. Further, the surface of the beads may be the most efficient positioning of impregnating agents.

Essentially all beads may be surface coated with the impregnating agent. Thus, the effect of the impregnating agent may be improved.

The impregnating agent may be mixed with the binding agent and thus the impregnating agent may be applied to the beads simultaneously with the binding agent and in one step.

The board may have any suitable dimension. For example, the board may have a length between 500 and 2000 mm, for example 600-1800 mm such as 1200 mm, a thickness between 30 and 500 mm, for example 50-300 mm, and a height between 250 and 4000 mm, for example 300-3000 mm. Such dimensions of boards may be suitable for building of for example houses.

Boards according to the invention may be suitable for use as wall materials. Further, the boards may be suitable for use underground and/or above ground, for efficient draining of, for example basements, or walls in buildings. Yet further, the board may be used in combination with other wall materials. The board may be used combined with other wall materials, wherein the board is positioned on the side of the other wall material exposed to the in average highest humidity. For example, a board according to the invention may be positioned on the outside of a wall of a house, i.e. on the side of the wall of the house exposed to rain or water from the ground.

The foamed plastic may be selected from the group consisting of polystyrene and polystyrene. Such foamed plastics may be suitable for producing boards according to the invention and such foamed plastics may lend boards according to the invention desired properties.

According to another aspect of the invention, the object is achieved by a method for production of an insulating and draining board, comprising: providing a mixture of beads of foamed plastic and binding agent; shaping said mixture into a board structure with two opposing main side surfaces; drying and/or hardening the board structure such that the beads of said mixture are bonded by means of said binding agent; providing the board structure with a bottom side portion being tapered towards a first free end extending in the longitudinal direction of the board, the first free end being located between planes coinciding with the main side surfaces.

Providing a mixture of beads of foamed plastic and binding agent may result in most or all of the beads being in contact with the binding agent.

Shaping said mixture into a board structure with two opposing main side surfaces is an efficient way of achieving a board structure.

Drying and/or hardening the board structure such that the beads of said mixture are bonded by means of said binding agent may be an efficient way of obtaining a board structure suitable for use as building material, with suitable properties with regards to, for example, resistance towards breakage, bending and compression; and load bearing capacity or any other desired properties.

Providing the board structure with a bottom side portion being tapered towards a first free end extending in the longitudinal direction of the board, the first free end being located between planes coinciding with the main side surfaces, may be an efficient way of obtaining a board with desired draining properties according to the discussions above concerning the board.

The step of providing the board structure with a bottom side portion may occur in a casting or moulding operation integrated with the step of shaping. Thus, efficient production of the board may be achieved.

The step of providing the board structure with a bottom side portion may occur in a cutting operation. The cutting operation may be for example any for the purpose suitable type of cutting the board, for example, cutting or sawing, wherein the cutting may be realised by means of, for example, a heated wire or heated knife.

The method according to the invention may further comprise a step of providing an impregnating agent to the surface of the bonded beads. Thus, properties of the board may be improved by means of impregnating agent.

The impregnating agent may be agent for reducing the surface tension of the board. Further, the hydrophilic character of the board may be altered by the impregnating agent. For example, the hydrophilic character of the board may be reduced, which may result in improved draining properties of the board.

The impregnating agent may be applied to the board by soaking or submerging the board in impregnating agent or by spraying the board with impregnating agent, or in any other suitable way of depositing the impregnating agent to the board. Such application of the impregnating agent may be efficient for coating a large part of the surfaces of the bonded beads with impregnating agent.
Relevant parts of the explanations given above with regard to the device are also applicable to the method. Reference is hereby made to these explanations,

### Brief description of the drawings

Figure 1 illustrates a perspective view of a board according to the invention.
Figure 2a illustrates a perspective view of two boards having bottom side portions having V-shaped cross-sections and grooves provided in the top side portions with a shape complimentary to the shape of the bottom side portion, one board being positioned on top of another.
Figure 2b illustrates the short sides of two boards draining water as viewed in the longitudinal direction of the boards, one board being positioned on top of another.
Figure 3a illustrates a short side of a board having a bottom side portion having a V-shaped cross-section, as viewed in the longitudinal direction of the board.
Figure 3b illustrates a short side of a board having a bottom side portion having a W-shaped cross-section, as viewed in the longitudinal direction of the board.
Figure 3c illustrates a short side of a board having a bottom side portion having a U-shaped cross-section, as viewed in the longitudinal direction of the board.
Figure 3d illustrates a short side of a board having a bottom side portion having a V-shaped cross-section, as viewed in the longitudinal direction of the board.
Figure 4a illustrates a short side of a board having a bottom side portion having a V-shaped cross-section, and a groove provided in the top side portion with a shape complementary to the shape of the bottom side portion, as viewed in the longitudinal direction of the board.
Figure 4b illustrates a short side of a board having a bottom side portion having a W-shaped cross-section, and a groove provided in the top side portion with a shape complementary to the shape of the bottom side portion, as viewed in the longitudinal direction of the board.
Figure 4c illustrates a short side of a board having a bottom side portion having a U-shaped cross-section, and a groove provided in the top side portion with a shape complementary to the shape of the bottom side portion, as viewed in the longitudinal direction of the board.
Figure 4d illustrates a short side of a board having a bottom side portion having a V-shaped cross-section, and a groove provided in the top side portion with a shape complementary to the shape of the bottom side portion, as viewed in the longitudinal direction of the board.
Figure 5 illustrates two boards of which the left board is a board according to the invention and the right board is not a board according to the invention.

### Detailed description

The invention will now be explained in more detail, and specific preferred embodiments, and variations of these, will be shown. The explanations are intended for illustrative and explanatory purposes and are not to be seen in any way as limiting the scope of the invention. The illustrations are schematic and all details are not illustrated, and all illustrated details may not be necessary for the invention.

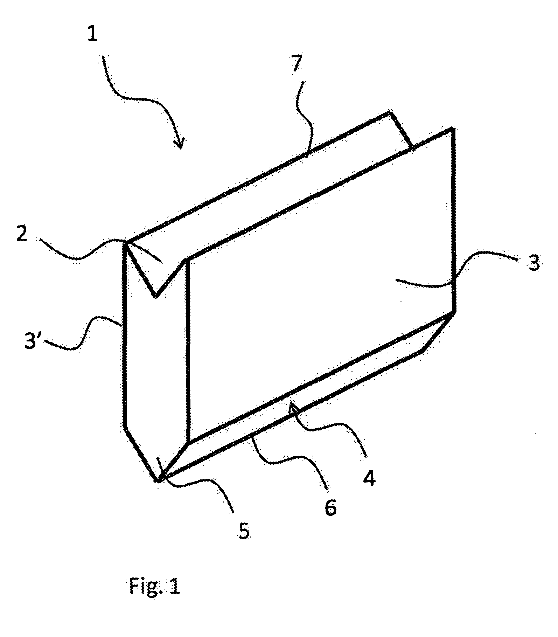

A specific embodiment of the invention will now be discussed with reference to Figure 1.

An insulating and draining board 1 according to one embodiment of the invention is illustrated in Figure 1. The board 1 has two opposing main side surfaces 3 and 3', of which only one side surface 3 is visible in Figure 1. When used as building materials, for example as part of a wall of a house, the side surfaces 3 and 3' may be positioned such that they are parallel to the surface of the wall such that the longitudinal direction of the board is parallel to the horizontal direction of the wall.

The board 1 is formed by bonded beads of foamed plastic, wherein pores are present between the beads forming a network for drainage of water. Thus, water present in the board 1, may be drained from the board 1. Water may enter the board for example from any of the main side surfaces 3 and 3', for example as the result of rain hitting the side surface or rain hitting any material in contact with the side surface and reaching the side surface through for example cracks or holes in the material being in contact with the surface. Additional or alternatively water may enter the board for example as the result of air containing water entering the board, the water being for example in gas phase or vapour, for example, as the result of wind or draught, or other type of transfer. Water present in the air as gas or vapour may condense in the board, for example as the result of the temperature of the air being decreased inside the board. Water may be drained from the board as a result of water drops or small streams of water trickling or running downwards through the pores present between the beads forming a network, as the result of for example gravity. Draining water will reach the bottom side portion 4, and leave the board through the bottom side portion 4, wherein a major part of the water will leave the board at or in the proximity of the free end 6 extending in the longitudinal direction of the board at a distance from the main side surfaces 3 and 3' and between planes coinciding with the main side surfaces. One result of this is that wetting of the main side surfaces 3 or 3' and/or any material in contact with the main side surfaces 3 or 3' is reduced, minimised or avoided. Thus damages or undesired effects resulting from such wetting is reduced, minimised or avoided. Such damages may be for example, frost erosion or frost shattering, dissolving of the material, fungi growth, or mould growth. In this example the bottom side portion 4 has a V-shaped cross-section 5. A groove 2 is provided in the top side portion 7 with a shape complementary to the shape of the tapering bottom side portion, thus allowing positioning of a similar or identical second board on top of or below the illustrated board 3.

The bonded beads of foamed plastic may be closer or more densely packed in the proximity of the main side surfaces compared to closer to a plane parallel to the main side surfaces located in the centre between the main side surfaces.

The pores present between the beads forming a network for drainage of water may be gradually increasing in size going inwards from anyone of the main side surfaces.

The board may be less porous in the proximity of the main side surfaces compared to closer to a plane parallel to the main side surfaces located in the middle between the main side surfaces.

Thus, water may be focused away from the main side surfaces towards a centre plane parallel to and between the main side surfaces. Thus, water in the board may be drained through the board away from the main side surfaces.

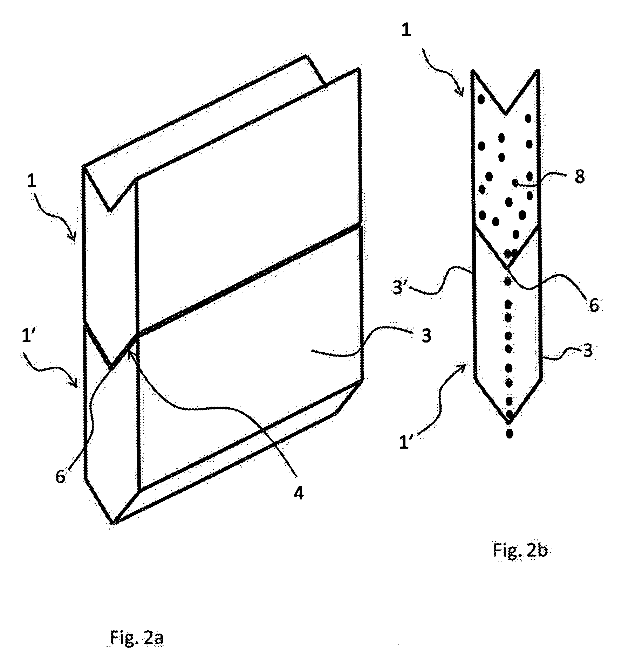

With reference to Figures 2a and 2b another embodiment of the invention is hereby discussed, exemplifying use of the boards according to the invention. It will be evident that the boards may be used as building materials whereby damages from water on the boards and/or other undesired effects are reduced, minimised or avoided. Figure 2a illustrates two boards 1 and 1', and in this example the boards are identical to the board discussed above regarding Figure 1. It is realised that the discussions below also may concern other types of boards according to the invention. In analogy with the discussions above concerning Figure 1, water present in the top board 1 will be drained downwards through the top board 1, and reach the bottom side portion 4 of the top board 1, and leave the top board 1 through the bottom side portion 4, wherein a major part of the water will leave the board 1 at or in the proximity of the free end 6 of board 1 extending in the longitudinal direction of the board 1, which free end 6 only to a small extent is visible in Figure 2a. In Figure 2b, wherein water is schematically illustrated as black dots 8, a positive effect of the water leaving the board 1 at or in the proximity of the free end 6 is illustrated,
The water 8 enters the lower board 1' just below the free end 6 of board 1 and thus enters the board 1' in the centre of the board 1' between the main side surfaces 3 and 3'. The water will therefore be drained through board 1' at a distance from the main side surfaces 3 and 3'. One result of this is that wetting of the main side surfaces 3 or 3' and/or any material in contact with the main side surfaces 3 or 3' is reduced, minimised or avoided. It is realised that more than two boards 3 may be positioned together. For example 1, 2, 3, 4, 5, 5-10, or more boards may be positioned stacked together. Not only is the water focused by the tapering towards the free end 6. Focusing of the water may be realised as a result of the groove 2 being provided in the top side portion 7 with a shape complementary to the shape of the tapering bottom side portion 4.

It is realised that there are several benefits with water leaving a board at a distance from the main sides 3 and 3', as discussed above, other than avoiding damages in the proximity of the surfaces 3 and 3'. For example, collecting of the water leaving a lowermost board 1 in a stack of two or more boards may be easier, as the output of water from the board is controlled and occurs at the defined area of the free end extending in the longitudinal direction of the board.

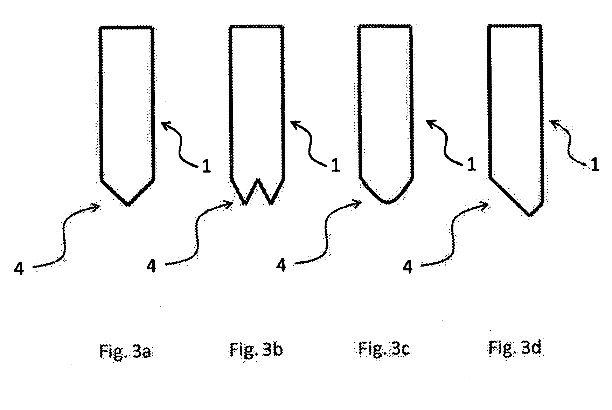

Figures 3a to 3d illustrates different embodiments of the board according to the invention, differing in the bottom side portion 4. Figure 3a illustrates a board 1 having a bottom side portion 4 having a V-shaped cross-section, Figure 3b illustrates a board 1 having a bottom side portion 4 having a W-shaped cross-section, Figure 3c illustrates a board 1 having a bottom side portion 4 having a U-shaped cross-section, and Figure 3d also illustrates a board 1 having a bottom side portion 4 having a V-shaped cross-section. Note that the bottom side portion according to Figure 3d differs from the bottom side portion according to Figure 3a, although the two bottom side portions both have a V-shape.

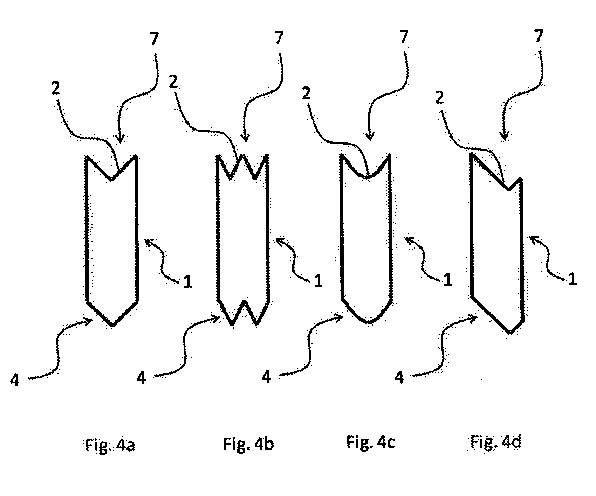

Figure 4a to 4c illustrates different embodiments of the board according to the invention, differing in the bottom side portion 4. Each board has a groove 2 provided in the top side portion 7 complimentary to the shape of the bottom side portion. Figure 4a illustrates a board 1 having a V-shaped cross-section, Figure 4b illustrates a board 1 having a W-shaped cross-section, Figure 4c illustrates a board having a U-shaped cross-section, and Figure 4d also illustrates a board 1 having a V-shaped cross-section. Note that the bottom side portion according to Figure 3d differs from the bottom side portion according to Figure 3a, although the two bottom side portions both have a V-shape.

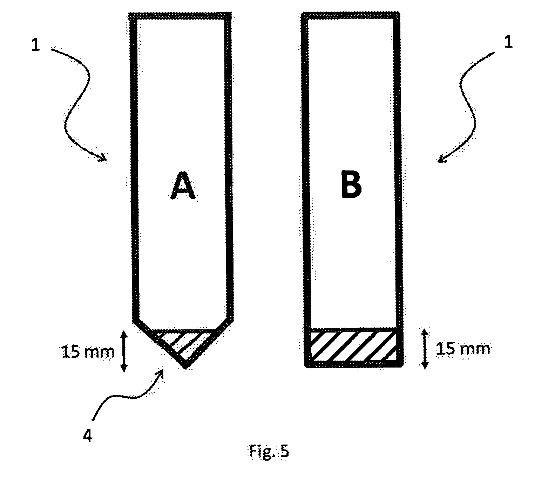

With reference to Figure 5 a comparative example is now discussed.

### Example:

From this example it will be apparent that a board according to the invention having a bottom side portion being tapered towards a first free end extending in the longitudinal direction of the board, the first free end being located between planes coinciding with the main side surfaces, has several benefits.

It has been found that a board according to the invention retains less water compared to a board without the tapering, as is evident from comparative experiments. Two boards were provided, boards A and B. The only difference between boards A and B was that board A was according to the invention with a bottom side portion having a V-shaped cross-section, as schematically illustrated in Fig. 3a, while board B was not according to the invention and did not have a bottom side portion being tapered but instead had a flat horizontal bottom. Both boards were weighed dry. Water was poured evenly across the top of the boards, which water was drained downwards through the boards A and B. It was noted that the water poured on board A left the board concentrated to the point of the V, thus at a distance from the side surfaces. The water poured on board B left the board spread out over the flat horizontal bottom.

The boards A and B was left for several hours in upright position, after which the boards where weighed a second time. It was determined that board A had gained considerably less in weight, compared to board B. The gain is weight was concluded to be water remaining in the boards. Thus it is concluded that board A retains considerably less water compared to board B.

It was further noted that a major part, or all, of the water remaining in the boards A and B was confined to the bottom side portion, that the water was present in the network of pores between the beads of foamed plastic, and that the water was present from the lowermost point of the board and extending 15 mm upwards, possibly at least partly as a result of capillary forces of the board, as illustrated in Figure 5. Thereby, the bottom side portion being tapered of board A, results in less water being retained compared to the other board B.

According to an alternative embodiment the beads of foamed plastic used in the boards disclosed in the embodiments discussed above may be replaced by any other suitable material for the insulating and draining board. For example, foamed glass may be used for such a purpose.

## Claims

1. An insulating and draining board (1) with two opposing main side surfaces (3) and a top side portion (7) and a bottom side portion (4),
which bottom side portion of the board being tapered towards a first free end (6) extending in the longitudinal direction of the board, the first free end (6)
being located between planes coinciding with the main side surfaces (3),
**characterised in that**
said board is formed by bonded beads of foamed plastic, wherein pores are present between the beads forming a network for drainage of water.

2. The insulating and draining board according to claim 1, wherein said bottom side portion (4) being tapered towards one or more additional free ends.

3. The insulating and draining board according to claim 2, wherein each additional free end being located between the planes coinciding with the main side surfaces (3).

4. The insulating and draining board according to anyone of the previous claims, wherein a groove is provided in the top side portion (7) with a shape complementary to the shape of the tapering bottom side portion (4).

5. The insulating and draining board according to anyone of the previous claims wherein the bottom side portion (4) has a cross-section comprising at least one V-shaped or U-shaped portion.

6. The insulating and draining board according to anyone of the previous claims wherein the bottom side portion (4) has a V-shaped, U-shaped, or W-shaped cross-section.

7. The insulating and draining board according to anyone of the previous claims,
wherein the beads of foamed plastic have an average diameter below 7 mm.

8. The insulating and draining board according to anyone of the previous claims, wherein the beads of foamed plastic are bonded by means of a binding agent.

9. The insulating and draining board according to anyone of the previous claims, wherein the draining board comprises at least one impregnating agent.

10. The insulating and draining board according to claim 9, wherein the impregnating agent is selected from the group consisting of flame retardant, sodium silicate, and potassium silicate, or combinations thereof.

11. The insulating and draining board according to claims 9 or 10, wherein at least some of the bonded beads are surface coated with the impregnating agent.

12. The insulating and draining board according to anyone of the previous claims, wherein the board has a length between 500 and 2000 mm, a thickness between 30 and 500 mm, and a height between 250 and 4000 mm.

13. The insulating board according to anyone of the previous claims, wherein the foamed plastic is selected from the group consisting of polystyrene and expanding polystyrene.

14. A method for production of an insulating and draining board (1), **characterised of**:
- providing a mixture of beads of foamed plastic and binding agent
- shaping said mixture into a board structure with two opposing main side surfaces,
- drying and/or hardening the board structure such that the beads of said mixture are bonded by means of said binding agent,
- providing the board structure with a bottom side portion (4) being tapered towards a first free end (6) extending in the longitudinal direction of the board, the first free end (6) being located between planes coinciding with the main side surfaces.

15. The method according to claim 14, wherein
the step of providing the board structure with a bottom side portion (4) occurs in a casting or moulding operation integrated with the step of shaping.

16. The method according to claim 14, wherein
the step of providing the board structure with a bottom side portion (4) occurs in a cutting operation.

## Patentansprüche

1. Isolier- und Drainageplatte (1) mit zwei gegenüberliegenden Hauptseitenflächen (3) und einem Oberseitenabschnitt (7) und einem Unterseitenabschnitt (4),
wobei der Unterseitenabschnitt der Platte sich in Richtung eines ersten freien Endes (6) verjüngt, das sich in der Längsrichtung der Platte erstreckt, wobei das erste freie Ende (6) zwischen Ebenen angeordnet ist, die mit den Hauptseitenflächen (3) zusammenfallen,
**dadurch gekennzeichnet, dass**
die Platte von miteinander verklebten Perlen aus Schaumstoff gebildet wird, wobei zwischen den Perlen Poren vorhanden sind, die ein Netz für das Ablaufen von Wasser bilden.

2. lsolier- und Drainageplatte nach Anspruch 1, wobei der Unterseitenabschnitt (4) sich in Richtung eines oder mehrerer weiterer freier Enden verjüngt.

3. Isolier- und Drainageplatte nach Anspruch 2, wobei jedes weitere freie Ende zwischen den Ebenen angeordnet ist, die mit den Hauptseitenflächen (3) zusammenfallen.

4. Isolier- und Drainageplatte nach einem der vorhergehenden Ansprüche, wobei in dem Oberseitenabschnitt (7) eine Nut mit einer Form vorgesehen ist, die zu der Form des sich verjüngenden Unterseitenabschnitts (4) komplementär ist.

5. Isolier- und Drainageplatte nach einem der vorhergehenden Ansprüche, wobei der Unterseitenabschnitt (4) einen Querschnitt aufweist, der mindestens einen V-förmigen oder U-förmigen Abschnitt umfasst.

6. Isolier- und Drainageplatte nach einem der vorhergehenden Ansprüche, wobei der Unterseitenabschnitt (4) einen V-förmigen, U-förmigen oder W-förmigen Querschnitt aufweist.

7. Isolier- und Drainageplatte nach einem der vorhergehenden Ansprüche, wobei die Perlen aus Schaumstoff einen mittleren Durchmesser von weniger als 7 mm aufweisen.

8. Isolier- und Drainageplatte nach einem der vorhergehenden Ansprüche, wobei die Perlen aus Schaumstoff mittels eines Bindemittels miteinander verklebt sind.

9. Isolier- und Drainageplatte nach einem der vorhergehenden Ansprüche, wobei die Drainageplatte mindestens ein Imprägniermittel umfasst.

10. Isolier- und Drainageplatte nach Anspruch 9, wobei das Imprägniermittel aus der Gruppe ausgewählt ist, die aus einem Flammhemmer, Natriumsilicat und Kaliumsilicat oder Kombinationen davon besteht.

11. Isolier- und Drainageplatte nach Anspruch 9 oder 10, wobei mindestens einige der miteinander verklebten Perlen mit dem Imprägniermittel oberflächenbeschichtet sind.

12. Isolier- und Drainageplatte nach einem der vorhergehenden Ansprüche, wobei die Platte eine Länge zwischen 500 und 2000 mm aufweist, eine Dicke zwischen 30 und 500 mm und eine Höhe zwischen 250 und 4000 mm aufweist.

13. Isolierplatte nach einem der vorhergehenden Ansprüche, wobei der Schaumstoff aus der Gruppe ausgewählt ist, welche aus Polystyrol und geschäumtem Polystyrol besteht.

14. Verfahren zur Herstellung einer Isolier- und Drainageplatte (1),
**gekennzeichnet durch**:
- Bereitstellen einer Mischung von Perlen aus Schaumstoff und Bindemittel,
- Formen der Mischung zu einer Plattenstruktur mit zwei gegenüberliegenden Hauptseitenflächen,
- Trocknen und/oder Härten der Plattenstruktur, so dass die Perlen der Mischung mittels des Bindemittels miteinander verklebt werden,
- Versehen der Plattenstruktur mit einem Unterseitenabschnitt (4), der sich in Richtung eines ersten freien Endes (6) verjüngt, das sich in der Längsrichtung der Platte erstreckt, wobei das erste freie Ende (6) zwischen Ebenen angeordnet ist, die mit den Hauptseitenflächen zusammenfallen.

15. Verfahren nach Anspruch 14, wobei
der Schritt des Versehens der Plattenstruktur mit einem Unterseitenabschnitt (4) in einem Gieß- oder Formvorgang besteht, der mit dem Schritt des Formens integriert ist.

16. Verfahren nach Anspruch 14, wobei
der Schritt des Versehens der Plattenstruktur mit einem Unterseitenabschnitt (4) in einem Schneidvorgang besteht.

## Revendications

1. Panneau isolant et drainant (1) avec deux surfaces latérales principales opposées (3) et une partie latérale supérieure (7) et une partie latérale inférieure (4),
dont la partie latérale inférieure du panneau étant effilée face à une première extrémité libre (6) se prolongeant dans le sens longitudinal du panneau, la première extrémité libre (6) étant situé entre des plans coïncidant avec les principales surfaces latérales (3),
**caractérisé en ce que**
ledit panneau est formé par des baguettes de plastique expansé liées, où des pores sont présents entre les baguettes formant un réseau pour le drainage de l'eau.

2. Panneau isolant et drainant selon la revendication 1, où ladite partie latérale inférieure (4) est effilée face à une ou plusieurs autres extrémités libres.

3. Panneau isolant et drainant selon la revendication 2, où chaque autre extrémité libre est située entre les plans coïncidant avec les principales surfaces latérales (3).

4. Panneau isolant et drainant selon l'une quelconque des revendications précédentes, où une rainure se trouve sur la partie latérale supérieure (7) avec une forme complémentaire à la forme de la partie latérale inférieure effilée (4).

5. Panneau isolant et drainant selon l'une quelconque des revendications précédentes, où la partie latérale inférieure (4) a une section transversale comprenant au moins une partie en V ou en U.

6. Panneau isolant et drainant selon l'une quelconque des revendications précédentes, où la partie latérale inférieure (4) a une section transversale en V, en U ou en W.

7. Panneau isolant et drainant selon l'une quelconque des revendications précédentes, où les baguettes de plastique expansé ont un diamètre moyen en-dessous de 7 mm.

8. Panneau isolant et drainant selon l'une quelconque des revendications précédentes, où les baguettes de plastique expansé sont liées par un agent de liaison.

9. Panneau isolant et drainant selon l'une quelconque des revendications précédentes, où le panneau drainant comprend au moins un agent d'imprégnation.

10. Panneau isolant et drainant selon la revendication 9, où l'agent d'imprégnation est sélectionné à partir du groupe consistant en ignifugeant, silicate de sodium et silicate de potassium ou des associations de ceux-ci.

11. Panneau isolant et drainant selon les revendications 9 ou 10, où au moins certaines des baguettes liées sont revêtues de l'agent d'imprégnation.

12. Panneau isolant et drainant selon l'une quelconque des revendications précédentes, où le panneau a une longueur entre 500 et 2000 mm, une épaisseur entre 30 et 500 mm, et une hauteur entre 250 et 4000 mm.

13. Panneau isolant et drainant selon l'une quelconque des revendications précédentes, où le plastique expansé est sélectionné à partir du groupe consistant en polystyrène et polystyrène expansé.

14. Procédé pour la production d'un panneau isolant et drainant (1), **caractérisé par**:
- la fourniture d'un mélange de baguettes de plastique expansé et d'un agent de liaison
- la formation dudit mélange dans une structure du panneau avec deux surfaces latérales principales opposées,
- le séchage et/ou le durcissement de la structure du panneau de sorte que les baguettes dudit mélange soient liées au moyen dudit agent de liaison,
- la fourniture à la structure du panneau d'une partie latérale inférieure (4) étant effilé face à une première extrémité libre (6) se prolongeant dans le sens longitudinal du panneau, la première extrémité libre (6) étant située entre des plans coïncidant avec les principales surfaces latérales.

15. Procédé selon la revendication 14, où
l'étape de fournir à la structure du panneau une partie latérale inférieure (4) se produit dans une opération de coulage ou de moulage intégrée à l'étape du formage.

16. Procédé selon la revendication 14, où
l'étape de fournir à la structure du panneau une partie latérale inférieure (4) se produit dans une opération de découpe.
